# DEMANDE DE BREVET EUROPEEN

(11) **EP 1 267 152 A2**
(43) Date de publication de la demande: **18.12.2002**
(21) Numéro de dépôt: 02290243.1
(22) Date de dépôt: 01.02.2002
(51) Int. Cl.: G01L 19/06, G01L 19/04, G01L 9/00, G01L 19/00

(54) **Dispositif de mesure comportant un capteur de pression**

(30) Priorité: 14.06.2001 FR 0107794
(71) Demandeur: Regulateurs Georgin, 92320 Chatillon (FR)
(72) Inventeur: Doubrovsky, Gilles Louis, 78140 Velizy (FR)
(74) Mandataire: Tanty, François

(57) **Abrégé**

La présente invention est relative à un dispositif de mesure, à fixer sur une canalisation ou une cuve contenant un fluide, comportant un capteur de pression (20) entouré par une paroi (80').

Ce dispositif comporte un revêtement (70) adhérant à ladite paroi (80') et apte à isoler le capteur du fluide.

## Description

La présente invention concerne la mesure de la pression et additionnellement, le cas échéant, de la température d'un fluide, gazeux ou liquide, notamment mais non exclusivement dans la plage des pressions allant de -1 bar (-10⁵ Pa) à 600 bars (6.10⁷ Pa).

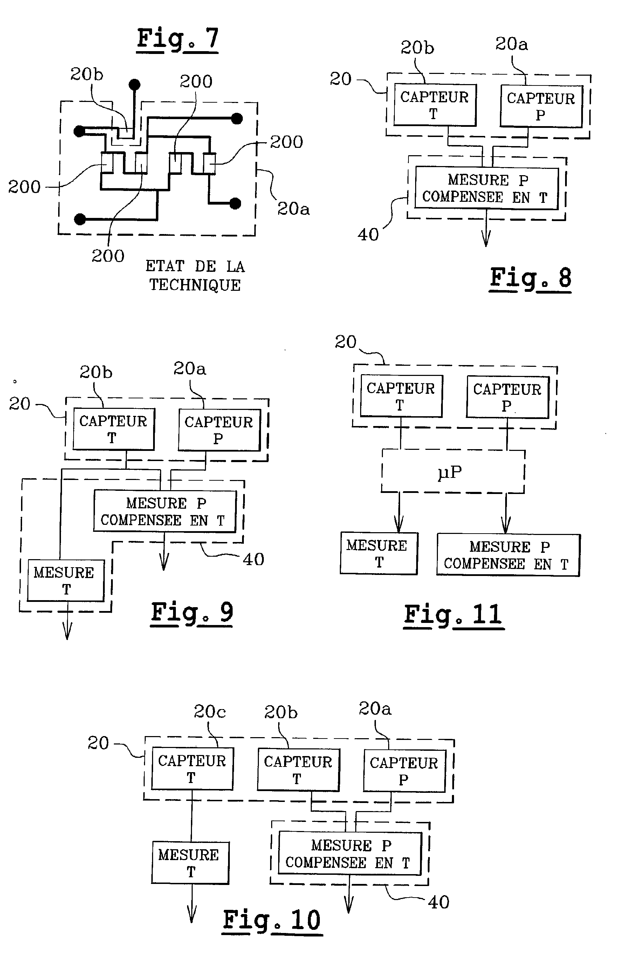

Il est connu d'utiliser, pour mesurer la pression d'un fluide circulant dans une canalisation, un dispositif de mesure comportant un raccord à fixer dans un perçage de la canalisation et un capteur de pression à membrane céramique, fixé sur le raccord. La membrane céramique comporte sur une face des pistes résistives connectées à la manière d'un pont de Wheatstone comme illustré sur la figure 6 et les déformations de la membrane sous l'effet de la pression produisent un déséquilibre du pont, lequel est détecté par des moyens électroniques appropriés pour générer un signal représentatif de la pression.

Il a été proposé d'utiliser, notamment pour l'industrie agro-alimentaire, des dispositifs de mesure de la pression dans lesquels le capteur de pression est isolé du fluide circulant dans la canalisation par une membrane en acier inoxydable, disposée de manière à venir à affleurement de la surface intérieure de la canalisation. L'espace séparant la membrane métallique et la membrane céramique du capteur est rempli d'un liquide apte à transmettre la pression, tel qu'une huile. Une telle solution n'offre pas entière satisfaction, car la membrane métallique est susceptible de rompre et de provoquer une fuite du liquide transmetteur de pression, contaminant ainsi le fluide circulant dans la canalisation. En outre, le capteur de pression peut continuer à fonctionner sans que l'on s'aperçoive immédiatement de la rupture de la membrane métallique, car le fluide circulant dans la canalisation exerce une pression sur la membrane céramique. Enfin, l'espace séparant la membrane métallique et la membrane céramique est relativement protégé du courant du fluide circulant dans la canalisation et cela peut favoriser une prolifération bactérienne qui, même détectée rapidement, entraîne un arrêt de la production jusqu'à ce que l'origine du problème soit trouvée, et provoque l'envoi au rebut de tous les produits fabriqués pendant la période jugée suspecte.

On connaît par ailleurs, par le brevet US 5 869 766, un dispositif de mesure de la pression comportant un disque d'isolation amovible, en polymère, interposé entre le capteur de pression et le fluide circulant dans la canalisation. Le raccord est de préférence réalisé dans le même polymère que le disque précité. Ce dernier repose contre un décrochement formé dans la paroi de la canalisation. Ce dispositif de mesure présente l'avantage d'éviter l'emploi d'un liquide transmetteur de pression et élimine les risques associés mais présente les inconvénients de créer un espace mort devant le disque d'isolation, en raison de l'existence du décrochement précité, et par ailleurs de ne pas être adapté à mesurer une dépression. Bien que l'existence d'un espace mort soit considérée comme un inconvénient (colonne 10, lignes 23-28), aucune solution n'est proposée pour y remédier, et ce dispositif de mesure est peu adapté à l'industrie agro-alimentaire.

L'invention a pour objet de proposer un nouveau dispositif de mesure de la pression qui soit fiable tout en étant suffisamment sensible, et qui soit compatible avec une utilisation dans l'industrie agro-alimentaire ou pharmaceutique, notamment.

Le nouveau dispositif de mesure selon l'invention est à fixer sur une canalisation ou une cuve contenant un fluide, comporte un capteur de pression entouré par une paroi et se caractérise par le fait qu'il comporte un revêtement adhérant à la paroi précitée, apte à isoler le capteur de pression du fluide.

Le dispositif de mesure comporte avantageusement un raccord. On entend par « raccord » toute pièce permettant le raccordement du dispositif de mesure avec la paroi de la canalisation ou de la cuve contenant le fluide dont on cherche à connaître la pression. Ce raccord peut être agencé pour être fixé sur la paroi de la canalisation ou de la cuve par vissage, soudage ou collage par exemple, et comporter un filetage ou une bride.

De préférence, la paroi du dispositif qui entoure le capteur est annulaire. On entend par « paroi annulaire » une paroi essentiellement continue, définissant un espace permettant de loger le capteur, la section intérieure n'étant pas limitée à une forme circulaire et pouvant être non circulaire, par exemple polygonale.

L'invention permet d'utiliser le dispositif de mesure sans qu'il y ait nécessairement appui de la paroi entourant le capteur contre une bride ou contre un décrochement du perçage de la canalisation ou de la cuve dans lequel est introduit le dispositif. L'invention permet ainsi d'éviter l'existence d'un espace mort en avant du dispositif de mesure, grâce à la possibilité de positionner la surface extérieure du revêtement à affleurement de la surface intérieure de la canalisation ou de la cuve. Le dispositif selon l'invention est donc parfaitement compatible avec une utilisation dans l'industrie agro-alimentaire ou pharmaceutique, notamment.

Par ailleurs, grâce à l'adhérence du revêtement au capteur et à la paroi du dispositif qui l'entoure, il est possible de mesurer une pression négative, ce qui constitue un avantage supplémentaire.

De préférence, le revêtement utilisé est anti-adhérent, par exemple de coefficient de frottement inférieur ou égal à 0,3, de préférence encore inférieur ou égal à 0,15, pour ne pas perturber la circulation du fluide, faciliter le nettoyage de la canalisation ou de la cuve et diminuer l'usure par abrasion.

Dans une réalisation préférée, le capteur est collé à l'intérieur d'une bague rapportée sur le raccord. Cette bague est de préférence de section intérieure adaptée à la forme du capteur, et peut ne pas être de forme circulaire. Une telle bague accroît les possibilités de choix des matériaux pouvant être utilisés, puisque la bague et le raccord n'ont pas à être réalisés dans le même matériau. La bague peut faciliter en outre l'opération de dépôt du revêtement, car elle est plus facile à manipuler que le raccord, plus encombrant. De préférence, la bague est métallique, par exemple en acier inoxydable, ce qui permet une bonne adhérence des matériaux pouvant être utilisés pour réaliser le revêtement et permet d'effectuer aisément un traitement de surface, par exemple de sablage, visant à améliorer l'accrochage du revêtement. La bague pourrait également être réalisée dans une matière plastique ou composite. Dans ce cas, le raccord peut ne pas être métallique. La bague peut être soudée sur le raccord ou, en variante, collée. La soudure de la bague sur le raccord est possible malgré la fragilité relative du capteur à la température, liée à la présence de connexions en étain. De préférence, l'un de la bague et du raccord comporte, dans le cas où la bague serait destinée à être soudée sur le raccord, une lèvre mince, ce qui permet de réduire le risque d'endommagement du capteur par la température. L'utilisation d'une bague rapportée permet encore de faciliter la fixation sur le capteur d'un circuit électronique et permet de diminuer le coût de la fabrication d'une gamme de dispositifs de mesure comprenant des raccords différents, grâce à l'utilisation de bagues standard sur ces différents raccords. De plus, la présence de la bague rend plus facile l'alignement de la face extérieure du capteur avec l'extrémité de la bague, car il est possible de poser le capteur et la bague sur une surface plane et d'introduire la colle par l'arrière. Une telle possibilité n'est pas offerte lorsque la paroi annulaire entourant le capteur et le raccord constituent un ensemble monobloc, auquel cas la colle doit être introduite par l'avant. L'introduction de la colle par l'arrière permet d'éviter une opération de rectification qui serait sinon nécessaire. De plus, la surface sur laquelle le revêtement est déposé étant plane, le revêtement peut être facilement réalisé avec une épaisseur uniforme, ce qui permet, le cas échéant, de ne pas perturber la mesure et ne pas compliquer le traitement des signaux provenant du capteur.

Dans une réalisation particulière, la bague rapportée porte un joint d'étanchéité.

Toujours dans une réalisation particulière, le raccord présente un épaulement et le dispositif comporte une cale interposée entre cet épaulement et le capteur. Cette cale permet d'éviter que la bague rapportée, dans laquelle est collé le capteur, ne vienne directement en appui axialement contre le raccord. Les contraintes de cisaillement auxquelles la colle est soumise, lorsque le fluide circulant dans la canalisation présente une pression élevée, demeurent ainsi relativement faibles.

L'épaisseur du revêtement peut être comprise par exemple entre 10 et 250 µm, étant par exemple inférieure ou égale à 0,20 mm, voire 0,1 mm, afin de ne pas affecter la sensibilité du capteur.

La colle servant à la fixation du capteur, qui est par exemple de type époxy, peut comporter une charge, par exemple des particules d'aluminium.

Selon un aspect de l'invention, le revêtement s'étend jusqu'à une gorge destinée à recevoir un joint d'étanchéité, notamment un joint torique. Le revêtement peut notamment s'étendre sur au moins une partie d'un côté de la gorge, par exemple jusqu'au fond de la gorge. On peut ainsi faire en sorte que le joint présent dans la gorge exerce une pression sur le revêtement et le plaque contre son support, diminuant ainsi le risque de décollement du revêtement. Cela permet également d'isoler complètement la bague du fluide.

L'invention a encore pour objet, selon un autre de ses aspects, un dispositif de mesure, comportant un capteur de pression entouré par une paroi, ce dispositif étant caractérisé par le fait qu'il comporte en outre au moins un capteur de température et un revêtement adhérant à la paroi et apte à isoler du fluide le capteur de pression et ledit au moins un capteur de température.

Le capteur de température peut être utilisé pour compenser la dérive en température des résistances du capteur de pression. Le capteur de température peut comporter par exemple une résistance CTP ou CTN.

Le dispositif de mesure peut également comporter, dans une mise en oeuvre particulière, deux capteurs de température en plus du capteur de pression, l'un des capteurs de température étant destiné à la compensation en fonction de la température de la dérive des résistances du capteur de pression et l'autre capteur de température étant destiné à délivrer une information représentative de la température du fluide. On peut obtenir grâce à un tel dispositif une mesure de la température du fluide relativement précise, grâce au fait que le capteur de température peut être disposé à proximité du fluide, en étant peu isolé thermiquement par rapport au fluide puisque l'épaisseur du revêtement est relativement faible et que le revêtement est directement au contact du fluide.

L'invention a encore pour objet un procédé pour mesurer la température d'un fluide, comportant l'étape suivante :
- mesurer la température d'un fluide dans une canalisation ou une cuve contenant ce fluide en utilisant un dispositif de mesure comportant un capteur de pression à membrane céramique sur laquelle adhère un revêtement apte à isoler le capteur du fluide, le dispositif de mesure comportant en outre au moins un capteur de température à proximité du capteur de pression, la température du fluide étant mesurée avec ledit au moins un capteur de température.

Le capteur de température peut être unique.

Le ou les capteurs de température peuvent être fixés sur la membrane céramique.

Le capteur de température peut être unique, comme indiqué plus haut, et servir à la fois à la mesure de la température du fluide et à la compensation de la dérive avec la température des résistances du capteur de pression.

Le dispositif peut comporter deux capteurs de température, notamment deux capteurs fixés sur la membrane céramique, l'un servant à la mesure de la température du fluide et l'autre servant à la compensation de la dérive en fonction de la température des composants du capteur de pression.

L'invention a encore pour objet un procédé de fabrication d'un dispositif de mesure, comportant les étapes suivantes :
a) disposer un capteur de pression à l'intérieur d'une bague et poser l'ensemble sur une surface plane,
b) introduire une colle dans le jeu existant entre la bague et le capteur, alors que l'ensemble repose sur la surface plane précitée.

Dans une mise en oeuvre du procédé dans laquelle le dispositif de mesure comporte un revêtement adhérant à la bague, le procédé comporte en outre l'étape suivante :
c) après polymérisation de la colle, appliquer un revêtement au moins sur la face précédemment en contact avec la surface plane, le matériau de la bague et le matériau du revêtement étant choisis de manière à ce que le revêtement adhère à la bague, de préférence suffisamment pour permettre l'emploi, ultérieurement, du dispositif sans appui du revêtement contre un décrochement d'un perçage d'une paroi d'une canalisation ou d'une cuve au travers duquel est introduit le dispositif.

La bague peut être fixée sur un raccord après que le capteur ait été préalablement muni d'un circuit électronique destiné à s'étendre à l'intérieur du raccord.

De préférence, pour réaliser le revêtement, on choisira un matériau présentant une bonne neutralité chimique, notamment un matériau qui ne réagit pas avec les acides ou les bases utilisées dans l'industrie agro-alimentaire, notamment la soude caustique servant à désinfecter les canalisations.

On choisira également un matériau qui, de préférence, présente des propriétés d'anti-adhérence, afin notamment d'être peu sujet à l'abrasion.

La rugosité Rₐ du revêtement sera de préférence inférieure ou égale à 1,6.

Le revêtement sera choisi dans un matériau ayant une bonne tenue à la température, qui soit de préférence capable de résister pendant le stockage à une température comprise entre -40°C et 80°C et d'être utilisé au contact d'un fluide dont la température est comprise entre -20°C et +150°C.

Comme matériaux polymères pouvant servir à réaliser le revêtement on peut citer, cette liste n'étant pas limitative, le PARYLENE® C distribué notamment par la société américaine PCS, et les FLUORIMID® 2B ou ECTFE ou FEP, ces deux derniers étant des fluoro-polymères distribués par la société française FLUOROTECHNIQUE, ou des élastomères, notamment de type CHEMRAZ®, distribués par la société GREEN TWEED.

L'invention pourra être mieux comprise à la lecture de la description détaillée qui va suivre, d'exemples non limitatifs de mise en oeuvre de l'invention, et à l'examen du dessin annexé, qui fait partie intégrante de la description, sur lequel :
- la figure 1 est une vue schématique, en coupe axiale, d'un dispositif de mesure conforme à un premier exemple de mise en oeuvre de l'invention,
- la figure 2 est une vue analogue à la figure 1, représentant une variante de réalisation,
- la figure 3 représente isolément la bague du dispositif de la figure 2, équipée du capteur de pression,
- la figure 4 est une vue analogue à la figure 1, représentant un autre exemple de réalisation,
- les figures 5 et 6 sont des coupes axiales, schématiques et partielles, représentant des variantes de réalisation,
- la figure 7 représente, de manière schématique, un exemple de circuit électrique d'un capteur de pression conventionnel, et
- les figures 8 à 11 sont différents schémas illustrant diverses possibilités pour la mesure de la température du fluide au moyen d'un dispositif selon l'invention.

Dans toute la description, y compris les revendications, l'expression « comportant un » doit être considérée comme étant synonyme de « comportant au moins un », sauf si le contraire est spécifié.

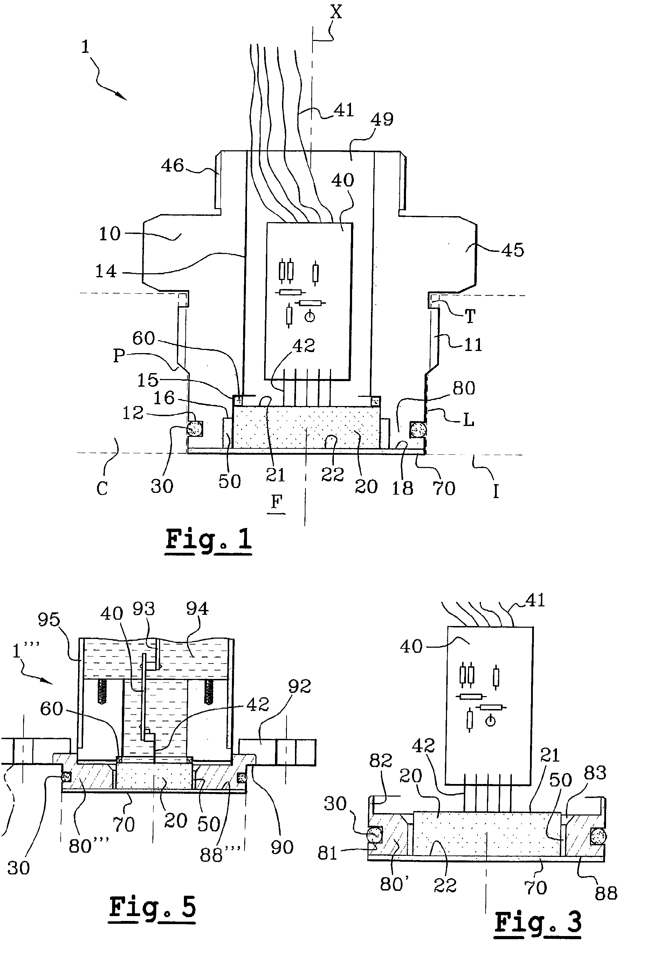

On a représenté à la figure 1 un dispositif 1 de mesure de la pression, comportant un raccord 10 métallique, en acier inoxydable, et un capteur de pression 20. Ce capteur 20 est connu en lui-même et comprend une membrane céramique sur laquelle est réalisé un circuit électrique 20a de mesure de la pression comportant des pistes résistives 200 comme illustré sur la figure 7 et un support en céramique, traversé par des liaisons électriques étamées reliant les extrémités des pistes conductrices réalisées sur la membrane céramique et la face intérieure 21 du capteur 20. L'invention n'est pas limitée à un capteur de type résistif et peut s'appliquer à des capteurs de type capacitif, par exemple. Le capteur 20 comporte également un capteur de température comportant une résistance sensible à la température 20b, à proximité des pistes résistives 200, sur la membrane en céramique. Un circuit électronique 40, par exemple d'interface, est fixé à la face supérieure 21 du support en céramique, et comporte des pattes de liaison 42 soudées au capteur 20.

Le raccord 10 est destiné, dans l'exemple décrit, à être vissé dans un perçage P de la paroi d'une canalisation C, cette dernière étant représentée en trait discontinu sur la figure 1. On ne sort pas du cadre de la présente invention lorsque la paroi de la canalisation est remplacée par la paroi d'une cuve, le dispositif de mesure étant destiné à mesurer un niveau, par exemple.

Le perçage P comporte une partie lisse L et une partie taraudée T et le raccord 10 comporte un filetage 11 destiné à se visser dans la partie taraudée T. Le raccord 10 présente une gorge annulaire 12 dans laquelle est logé un joint torique 30 venant s'appliquer sur la paroi lisse L du perçage P. Le joint 30 est situé à proximité de la surface intérieure I de la canalisation C et le diamètre extérieur de la partie inférieure 80 du raccord 10, s'étendant en regard de la partie lisse L, est choisi de manière à permettre un ajustement du raccord 10 avec le jeu le plus faible possible dans le perçage P.

Le raccord 10 présente, dans sa portion 45 s'étendant hors de la paroi de la canalisation C, une section extérieure hexagonale permettant de le visser avec une clé adaptée.

Le raccord 10 présente, dans l'exemple représenté, au-dessus de la portion 45, un filetage 46 servant à fixer un boîtier, non représenté, logeant un ou plusieurs circuits de traitement électroniques, par exemple. Ces circuits peuvent être reliés par exemple par des fils 41 au circuit électronique 40. Le filetage 46 pourrait, dans une variante, être supprimé.

Le raccord 10 est traversé par une lumière centrale 49 d'axe X, logeant un ou plusieurs circuits électroniques, notamment le circuit électronique 40, cette lumière 49 étant pourvue de deux lamages 15 et 16 à sa partie inférieure, comme on peut le voir sur la figure 1.

Le premier lamage 16 permet de ménager autour du capteur 20 une gorge annulaire dans laquelle est introduite une colle 50, chargée et de type époxy, permettant d'assurer la fixation du capteur 20 sur le raccord 10.

Le second lamage 15 reçoit une cale 60 qui vise à reprendre les efforts exercés sur le capteur 20, selon l'axe X, par la pression du fluide F circulant dans la canalisation C. En l'absence d'une reprise de ces efforts axiaux, l'anneau de colle 50 serait soumis à des efforts de cisaillement importants, qui pourraient entraîner un risque de détachement du capteur 20.

La face avant 18 du raccord 10, l'anneau de colle 50 et la face avant 22 du capteur 20 sont recouverts par un revêtement 70. Ce dernier adhère suffisamment à la face avant 18 du raccord 10 pour permettre l'emploi du dispositif de mesure 1 sans que le revêtement 70 n'ait à venir en appui frontalement contre un décrochement du perçage P, contrairement à ce qui est le cas du brevet US 5 869 766 précité. Le revêtement 70 adhère également fortement, dans l'exemple décrit, à la face avant 22 du capteur 20 et à l'anneau de colle 50.

Dans l'exemple considéré, le revêtement 70 est constitué de PARYLENE® C, de 0,025 mm d'épaisseur.

Le mode de réalisation représenté à la figure 1 n'est pas entièrement satisfaisant dans le sens où la colle 50 doit être mise en place autour du capteur 20 par l'avant, ce qui impose de maintenir le capteur 20 dans l'axe X du raccord pendant la durée nécessaire à la polymérisation de la colle et oblige ensuite à rectifier la face avant 18 du raccord 10 pour éliminer le bourrelet de colle 50 formant saillie. Cela complique grandement la fabrication du dispositif de mesure 1. De plus, si le capteur 20 n'est pas parfaitement dans l'axe X du raccord, sa face avant 22 ne vient pas dans l'alignement exact de la face avant 18 du raccord 10, ce qui rend difficile le dépôt d'une couche de revêtement 70 d'épaisseur uniforme. Lorsque le revêtement 70 n'est pas déposé de manière uniforme, les performances du capteur sont susceptibles d'être affectées.

Le dispositif de mesure 1' de la figure 2, qui correspond à un mode de réalisation plus avantageux, pallie ces inconvénients et facilite grandement la fabrication. Le raccord 10' du dispositif 1' diffère du raccord 10 d'une part par l'absence du lamage 16 et de la gorge annulaire 12 et d'autre part par la présence d'une bague rapportée 80', à l'intérieur de laquelle est collé le capteur 20. La bague 80', représentée isolément à la figure 3, est réalisée en acier inoxydable et présente à sa périphérie une gorge annulaire 81 pour loger le joint d'étanchéité 30 et en partie supérieure une lèvre mince 82 destinée à recouvrir la surface latérale du raccord 10', comme on peut le voir sur la figure 2. Dans l'exemple considéré, la lèvre 82 est soudée sur le raccord 10'. Il convient de noter que le choix de l'acier inoxydable pour réaliser la bague 80' est avantageux car, outre la compatibilité de l'acier inoxydable avec un usage alimentaire, celui-ci présente une mauvaise conductibilité thermique, ce qui permet de réaliser la soudure sur le raccord 10' sans soumettre le capteur 20 à une température excessive, susceptible d'endommager ses connexions électriques.

La bague 80' permet en outre une fixation aisée et précise du capteur 20, car il suffit de poser la bague 80' et le capteur 20 sur une surface plane puis d'introduire par l'arrière, par l'ouverture 83, la colle 50. Une fois cette dernière polymérisée, la face avant 22 du capteur 20 se situe parfaitement dans l'alignement de la face avant 88 de la bague 80', et aucune rectification n'est nécessaire. Les problèmes précités, évoqués lors de la description du mode de réalisation de la figure 1, sont donc supprimés. De plus, la mise en place du circuit électronique 40 peut s'effectuer très aisément, même après la fixation du capteur 20 sur la bague 80', car l'opérateur dispose d'un accès aisé à la face arrière 21 du capteur 20 tant que la bague 80' n'est pas fixée sur le raccord 10'.

On remarquera à l'examen de la figure 2 qu'il existe un espace 84 entre la bague 80' et la face en regard 18' du raccord 10'. Cet espace 84 permet de faire en sorte que les efforts axiaux exercés sur le capteur 20 par la pression du fluide F circulant dans la canalisation C soient repris majoritairement par la cale 60, donc de diminuer les contraintes de cisaillement exercées sur l'anneau de colle 50 reliant le capteur 20 à la bague 80'.

Les faces avant 22 du capteur 20 et 88 de la bague 80' sont recouvertes par le revêtement 70, à l'instar de l'exemple de réalisation précédent.

On peut sans sortir du cadre de la présente invention, modifier la forme du raccord ou celle de la bague.

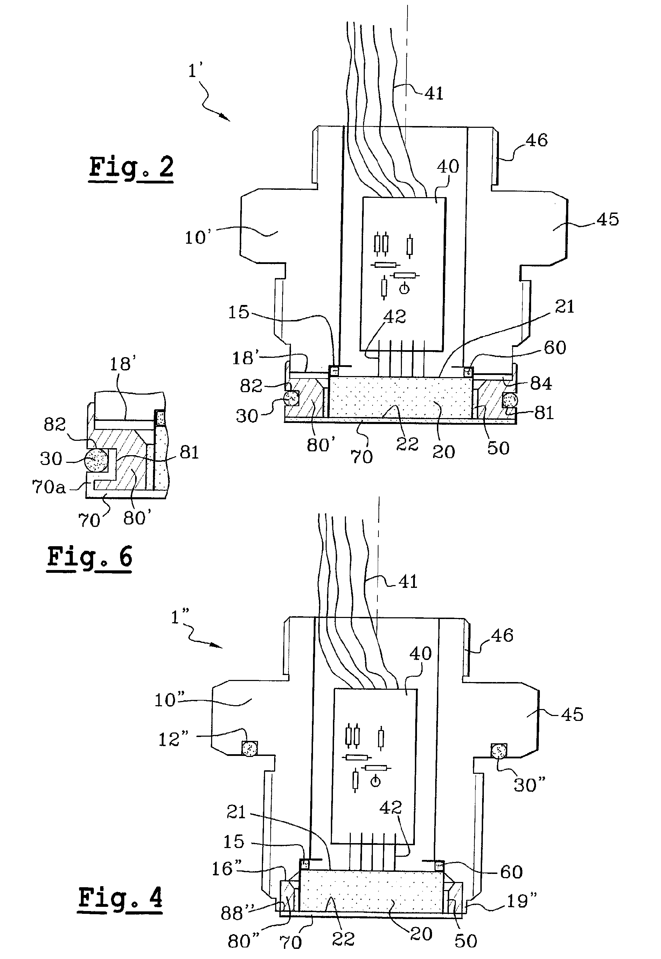

A titre d'exemple, on a représenté sur la figure 4 un dispositif 1" de mesure de la pression qui comporte un raccord 10" et une bague 80" ayant des formes différentes. La bague 80" ne présente pas de lèvre 82 car elle vient se loger dans un lamage 16" du raccord 10". Ce dernier comporte à son extrémité inférieure une lèvre mince 19", laquelle est soudée sur la périphérie de la bague 80". Un revêtement 70 est déposé pour recouvrir la face avant 22 du capteur 20 et la face avant 88" de la bague 80". Le raccord 10" présente une gorge annulaire 12", logeant un joint torique 30", ce dernier étant destiné à venir en appui axialement sur la surface extérieure de la canalisation.

Bien entendu, l'invention n'est pas limitée à un montage dans lequel le revêtement 70 vient à affleurement de la paroi intérieure de la canalisation C.

A titre d'exemple, on a partiellement représenté à la figure 5 un dispositif de mesure 1''' dans lequel le revêtement 70 se situe en retrait de la surface intérieure de la canalisation C. Une telle configuration est possible dans certaines industries, non agro-alimentaires.

Dans le dispositif 1"', le capteur 20 est fixé par un anneau de colle 50 à une bague 80''' qui présente un épaulement 90 pour venir en appui sur la surface extérieure de la canalisation C. La bague 80"' loge un joint torique 30 qui assure l'étanchéité du montage dans le perçage de la canalisation C.

La bague 80''' est maintenue en place par une bride 92 destinée à être boulonnée sur la canalisation C.

Dans l'exemple de la figure 5, le circuit électronique 40 est relié à un deuxième circuit électronique 93 et l'ensemble est noyé dans une résine isolante 94, à l'intérieur d'un boîtier 95.

Le revêtement 70, dans les exemples qui viennent d'être décrits, peut être appliqué de multiples façons, selon sa nature et les préconisations de son fabricant.

Le revêtement peut être étendu à la paroi latérale du raccord ou de la bague rapportée sur celui-ci, sans que l'on sorte du cadre de la présente invention. On peut également ne le déposer que sur une partie seulement de la face avant 18 du raccord 10 ou sur une partie seulement des faces avant 88, 88" et 88'" des bagues respectives 80', 80" et 80'", bien que cela soit moins préférable à un recouvrement complet.

On a représenté sur la figure 6 un détail d'une variante de réalisation du dispositif de la figure 2, dans laquelle le revêtement comporte une portion 70a qui s'étend jusque dans la gorge 81. Plus précisément, dans l'exemple illustré, le revêtement 70 s'étend sur tout le fond de la gorge 81 et le joint d'étanchéité 30 vient en appui contre le revêtement 70 dans le fond de la gorge 81, ce qui contribue à améliorer la tenue du revêtement en diminuant les risques de décollement de celui-ci et à protéger la bague en l'isolant du fluide.

Dans les exemples qui viennent d'être donnés, les bagues 80', 80" ou 80''' présentent des sections intérieures circulaires mais on ne sort pas du cadre de la présente invention en utilisant un capteur 20 non circulaire, par exemple carré, et des bagues de section intérieure correspondante.

Comme indiqué plus haut, le capteur 20 peut comporter un capteur de température, afin par exemple de tenir compte de la dérive avec la température des composants servant à mesurer la pression, comme illustré sur la figure 8.

On peut utiliser le signal délivré par le capteur de température 20b pour compenser en température la mesure de pression et connaître la température du fluide, comme illustré sur la figure 9.

Le capteur 20b permet de connaître avec une précision suffisante pour la plupart des applications la température du fluide, grâce à la faible inertie thermique du revêtement et de la membrane.

En variante, comme illustré sur la figure 10, le dispositif comporte un deuxième capteur de température 20c qui est utilisé uniquement pour mesurer la température du fluide. Le capteur 20c peut être présent sur la membrane en céramique à côté du circuit électrique 20a, à l'instar du capteur 20b.

Le circuit électrique 20a et le capteur de température 20b peuvent être reliés à des moyens de traitement à microprocesseur, microcontrôleur ou analogue, comme illustré sur la figure 11, agencés pour délivrer une information représentative de la température du fluide mesurée, par exemple sous la forme d'un signal digital, et une information représentative de la pression, tenant compte de la température mesurée par le capteur 20b.

Le dispositif de mesure peut servir à délivrer une information autre qu'une valeur de pression, par exemple un débit ou un niveau, notamment lorsque le dispositif est installé au fond d'une cuve.

## Revendications

1. Dispositif de mesure, à fixer sur une canalisation (C) ou une cuve contenant un fluide (F), comportant un capteur de pression (20) entouré par une paroi (80 ; 80' ; 80" ; 80'''), **caractérisé par le fait qu'**il comporte un revêtement (70) adhérant à ladite paroi (80 ; 80' ; 80" ; 80''') et apte à isoler le capteur du fluide (F).

2. Dispositif selon la revendication 1, **caractérisé par le fait que** le revêtement adhère suffisamment à la paroi (80 ; 80' ; 80" ; 80''') du dispositif pour permettre de l'utiliser sans qu'il y ait appui de la paroi (80 ; 80' ; 80" ; 80"') contre un décrochement d'un perçage de la canalisation ou de la cuve dans lequel est introduit le dispositif.

3. Dispositif selon la revendication 1 ou 2, **caractérisé par le fait que** ladite paroi (80 ; 80' ; 80" ; 80''') est annulaire.

4. Dispositif selon l'une quelconque des revendications précédentes, **caractérisé par le fait que** le revêtement (70) est anti-adhérent.

5. Dispositif selon l'une quelconque des revendications précédentes, **caractérisé par le fait que** le coefficient de frottement du revêtement (70) est inférieur ou égal à 0,3, de préférence inférieur ou égal à 0,15.

6. Dispositif selon l'une quelconque des revendications précédentes, **caractérisé par le fait que** le revêtement (70) présente une épaisseur uniforme.

7. Dispositif selon l'une quelconque des revendications précédentes, **caractérisé par le fait que** l'épaisseur du revêtement (70) est comprise entre 10 et 250 µm, étant de préférence inférieure ou égale à 0,2 mm, voire 0,1 mm.

8. Dispositif selon l'une quelconque des revendications précédentes, **caractérisé par le fait que** la rugosité Rₐ du revêtement (70) est inférieure ou égale à 1,6.

9. Dispositif selon l'une quelconque des revendications précédentes, **caractérisé par le fait que** le revêtement est un matériau polymère, par exemple choisi parmi les polymères suivants : PARYLENE® C, FLUORIMID® 2B, ECTFE, FEP ou les élastomères, notamment de type CHEMRAZ®.

10. Dispositif selon l'une quelconque des revendications précédentes, **caractérisé par le fait que** le capteur (20) est collé à l'intérieur d'une bague (80' ; 80" ; 80''') rapportée sur un raccord.

11. Dispositif selon la revendication précédente, **caractérisé par le fait que** la bague est métallique.

12. Dispositif selon l'une des deux revendications immédiatement précédentes, **caractérisé par le fait que** la bague est soudée sur le raccord.

13. Dispositif selon la revendication 10 ou 11, **caractérisé par le fait que** la bague est collée sur le raccord.

14. Dispositif selon l'une des revendications 10 à 13, **caractérisé par le fait que** l'un du raccord et de la bague (80) comporte une lèvre mince (82 ; 19").

15. Dispositif selon l'une quelconque des revendications 10 à 14, **caractérisé par le fait que** la bague (80) porte un joint d'étanchéité (30).

16. Dispositif selon l'une quelconque des revendications précédentes, **caractérisé par le fait que** le dispositif présente un épaulement (15) et **par le fait qu'**il comporte une cale (60) interposée entre cet épaulement (15) et le capteur (20).

17. Dispositif selon l'une quelconque des revendications précédentes, **caractérisé par le fait que** le revêtement s'étend jusqu'à une gorge destinée à recevoir un joint d'étanchéité, notamment un joint torique.

18. Dispositif selon l'une quelconque des revendications précédentes, **caractérisé par le fait que** le revêtement s'étend sur au moins une partie d'un côté de la gorge, par exemple jusqu'au fond de la gorge.

19. Dispositif selon l'une quelconque des revendications précédentes, **caractérisé par** le fait le dispositif de mesure comporte deux capteurs de température (20b, 20c) en plus du capteur de pression (20a), l'un des capteurs de température étant destiné à la compensation en fonction de la température de la dérive des résistances du capteur de pression et l'autre capteur de température étant destiné à délivrer une information représentative de la température du fluide.

20. Procédé de mesure de la température d'un fluide comportant les étapes consistant à :
- mesurer la température du fluide dans une canalisation ou une cuve contenant ce fluide en utilisant un dispositif de mesure comportant un capteur (20) de pression à membrane céramique sur laquelle adhère un revêtement apte à isoler le capteur du fluide, le dispositif de mesure comportant en outre au moins un capteur de température à proximité du capteur de pression, la température du fluide étant mesurée avec ledit au moins un capteur de température.

21. Procédé de fabrication d'un dispositif de mesure tel que défini dans l'une quelconque des revendications 1 à 19, comportant les étapes suivantes :
(a) disposer un capteur de pression (20) à l'intérieur d'une bague (80' ; 80" ; 80"') et poser l'ensemble sur une surface plane,
(b) introduire une colle (50) dans le jeu existant entre la bague et le capteur, alors que l'ensemble repose sur la surface plane précitée,
(c) après polymérisation de la colle, appliquer un revêtement (70) au moins sur la face précédemment en contact avec la surface plane, le matériau de la bague et le matériau du revêtement étant choisis de manière à ce que le revêtement adhère à la bague, de préférence suffisamment pour permettre l'emploi, ultérieurement, du dispositif sans appui du revêtement contre un décrochement d'un perçage d'une paroi d'une canalisation ou d'une cuve dans lequel est introduit le dispositif.

22. Procédé selon la revendication précédente, **caractérisé par le fait que** la bague est fixée sur le raccord après avoir préalablement muni le capteur d'un circuit électronique (40) destiné à s'étendre à l'intérieur dudit raccord.
